# EUROPEAN PATENT SPECIFICATION

(11) **EP 2 196 945 B1**
(45) Date of publication and mention of the grant of the patent: **08.07.2015**
(21) Application number: 09177077.6
(22) Date of filing: 25.11.2009
(51) Int. Cl.: G06K 13/08

(54) **Card processing apparatus**
Kartenverarbeitungsgerät
Appareil de traitement de carte

(30) Priority: 09.12.2008 JP 2008313787
(43) Date of publication of application: 16.06.2010
(73) Proprietor: Hitachi-Omron Terminal Solutions, Corp., Shinagawa-ku Tokyo 141-8576 (JP)
(72) Inventor: Ischiguro, Jun, Tokyo 100-8220 (JP); Nakabo, Akinobu, Tokyo 100-8220 (JP)
(74) Representative: MERH-IP Matias Erny Reichl Hoffmann

(56) References cited:
- US-A1- 2006 138 241

## Description

### Technical Field

The present invention relates to a card processing apparatus having a shutter member for opening or closing a slot.

### Background Art

Conventionally, a card processing apparatus including a slot into which a card is inserted and a shutter member for opening or closing the slot, which has countermeasures for preventing any illegal act has been known (for example, refer to Patent Literatures 1 and 2).

Patent Literature 1 discloses a card processing apparatus in which a plurality of V-shaped grooves are formed at an end part of a shutter member. In this card processing apparatus, when the shutter member is closed after a card to which a string is attached is inserted, the string falls into a V-shaped groove. According to this manner, it is possible to prevent the shutter from being forcibly opened by using the string attached to the card. Therefore, forcible pulling out of the inserted card before an update of recorded information can be prevented.

On the other hand, there is a case of illegal act in which a card jam is intentionally caused by placing a foreign matter inside the slot, and the jammed card is pulled out and carried off while a holder of the card is going for a staff. As a countermeasure for such case, Patent Literature 2 discloses a card processing apparatus in which a foreign matter detecting member in the shape of rod, an engaging member into which the foreign matter detecting member fits and a detecting member for detecting whether the foreign matter detecting member fits into the engaging member are disposed in the slot. The foreign matter detecting member is so formed as to extend in a direction orthogonal to an insertion direction of the card. The engaging member is so formed in the shape of groove as to extend in the direction orthogonal to the insertion direction of the card. In this card processing apparatus, the foreign matter detecting member moves upward when a shutter member opens and moves downward when the shutter member closes to fit into a groove of the engaging member.

According to the card processing apparatus of Patent Literature 2, in the case where a string-like foreign matter is placed in the slot, when the shutter member closes, the foreign matter detecting member moving downward is blocked by the foreign matter and fails to fit into the engaging member. At this time, the detecting member detects that the foreign matter detecting member does not fit into the engaging member. Thus, it is detected that a string-like foreign matter is placed in the slot.

### Citation List

### Patent Literature

Patent Literature 1: Japanese Patent No. 2915789
Patent Literature 2: Japanese Patent No. 3876053

### Summary of Invention

### Technical Problems

While the conventional card processing apparatus disclosed in Patent Literature 2 can detect a string-like foreign matter, if, for example, a ribbon-like foreign matter is placed to close foreign matter.

The aforementioned card processing apparatus disclosed in Patent Literature 1 does not have the function to detect the foreign matter placed in the slot.

The present invention is directed to solve the aforementioned problems and aims to provide a card processing apparatus which can detect a foreign matter even when it is placed in a slot, as well as prevent a placement of foreign matter in the slot.

### Solution to Problems

A card processing apparatus according to the present invention comprises the features of claim 1.

With this configuration, in the case in which a foreign matter is placed in the slot, when the shutter member is so moved as to close the slot, the foreign matter prevents the projecting parts from being received by the receiving parts. Namely, by the foreign matter, the shutter member is prevented from moving to the position of the closing state. At this time, since the shutter position detector detects that the shutter member does not move to the position of the closing state, the placement of foreign matter in the slot can be detected. Further, since a plurality of projecting parts are formed on the shutter member and receiving parts for receiving the projecting parts are formed at the contact part, it becomes more difficult to place a foreign matter inside the slot compared to a case where a groove-like engaging part which extends to a direction orthogonal to the card insertion direction is provided.

The above card processing apparatus may be configured as follows. A drive unit for moving the shutter member and a control unit for controlling the drive unit are further provided. When the shutter member is moved by the drive unit to close the slot, the control unit preferably determines whether a foreign matter is placed in the slot by determining whether the shutter member is moved to the position of the closing state based on the detection result of the shutter position detector.

The above card processing apparatus may be also configured as follows. A drive unit for moving the shutter member, a control unit for controlling the drive unit, a card insertion detector for detecting insertion of the card into the slot and a card position detector for detecting the position of a card inserted through the slot are further provided. When the shutter member is moved by the drive unit to close the slot, if it is determined that the shutter member does not move to the position of the closing state based on the detection result of the shutter position detector, the control unit preferably determines whether a foreign matter is placed in the slot based on the detection result of the card insertion detector and the card position detector.

With this configuration, when both the card insertion detector and the card position detector do not detect a card, it is determined that a foreign matter is placed at the slot. When at least one of the card insertion detector and the card position detector detects a card, it is determined that a mechanical failure has occurred. Accordingly, it is possible to detect the placement of foreign matter and the mechanical failure distinctively. Thus, suitable measures

### Advantageous Effects of Invention

According to the present invention, it is possible to provide a card processing apparatus which can detect a foreign matter even when it is placed in the slot, as well as prevent the placement of foreign matter in the slot.

Other objects, features and advantages of the present invention will become apparent from the following description of the embodiments of the invention taken in connection with the accompanying drawings.

### Brief Description of Drawings

Fig. 1 is a block diagram showing a configuration of an ATM in which a card processing apparatus according to an embodiment of the present invention is mounted;
Fig. 2 is a schematic side view showing the card processing apparatus of Fig. 1;
Fig. 3 is a front view showing a state in which a shutter member of Fig. 2 is opened;
Fig. 4 is a front view showing a state in which the shutter member of Fig. 2 is closed;
Fig. 5 is a block diagram showing a configuration of the card processing apparatus of Fig. 2;
Fig. 6 is a flow chart for illustrating operation of the card processing apparatus according to an embodiment of the present invention;
Fig. 7 is a side view for illustrating operation of the card processing apparatus according to an embodiment of the present invention;
Fig. 8 is a side view for illustrating operation of the card processing apparatus according to an embodiment of the present invention;
Fig. 9 is a side view for illustrating operation of the card processing apparatus according to an embodiment of the present invention;
Fig. 10 is a flow chart for illustrating operation of closing a slot of the card processing apparatus according to an embodiment of the present invention;
Fig. 11 is a front view showing a state in which the shutter member pinches a card;
Fig. 12 is a side view showing a state in which the shutter member pinches a card;
Fig. 13 is a front view showing a state in which the shutter member pinches a foreign matter;
Fig. 14 is side view showing a state in which the shutter member pinches a foreign matter; and
Fig. 15 is a side view showing a state in which the shutter member pinches a foreign matter.

### Description of Embodiments

Hereinafter, embodiments of the present invention will be described with reference to drawings. In the following embodiments, description will be made for a case where the present invention is applied to a card processing apparatus mounted in an ATM (Automated Teller Machine).

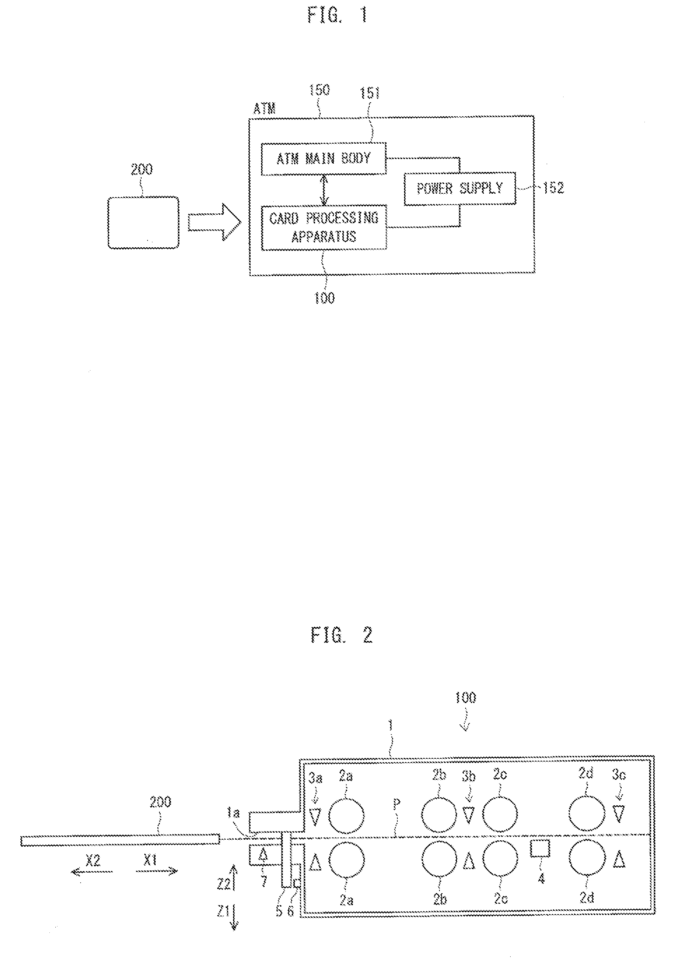

At first, configurations of a card processing apparatus and an ATM according to the present embodiment will be described with reference to Figs. 1 to 5.

As shown in Fig. 1, an ATM 150 includes an ATM main body 151, a power supply 152 and a card processing apparatus 100. The ATM 150 is placed in financial institutions and the like for conducting transactions such as cash withdrawal by customer.

The card processing apparatus 100 according to an embodiment of the present invention is provided in the ATM 150 and electric power is supplied from the power supply 152. The card processing apparatus 100 is configured to execute the predetermined processing to a card 200 inserted by a user. Specifically, the card processing apparatus 100 reads data recorded in the card 200 and transmits the read data to the ATM main body 151. Further, the card processing apparatus 100 receives the data transmitted from the ATM main body 151 and writes the received data in the card 200.

Moreover, as shown in Fig. 2, the card processing apparatus 100 includes a housing 1, conveying rollers 2a to 2d, card position detecting sensors 3a to 3c, a read/write head 4, a shutter member 5, a shutter position detecting sensor 6 and a card insertion detecting sensor 7. The card position detecting sensor 3a is an example of the "card position detector" in the present invention. The shutter position detecting sensor 6 is an example of the "shutter position detector" in the present invention. The card insertion detecting sensor 7 is an example of the "card insertion detector" in the present invention.

The housing 1 has a slot 1a to which the card 200 is inserted, at its end part in the direction of arrow X2. The conveying rollers 2a to 2d are respectively provided in pairs across a conveying path P, at upper side and lower side. The conveying rollers 2a to 2d convey the card 200 along an insertion direction (direction of arrow X1) and ejection direction (direction of arrow X2).

The card position detecting sensors 3a to 3c are, for example, transmission type optical sensors and detect the position of the card 200 on the conveying path P. The read/write head 4 reads and writes data from/to the inserted card 200.

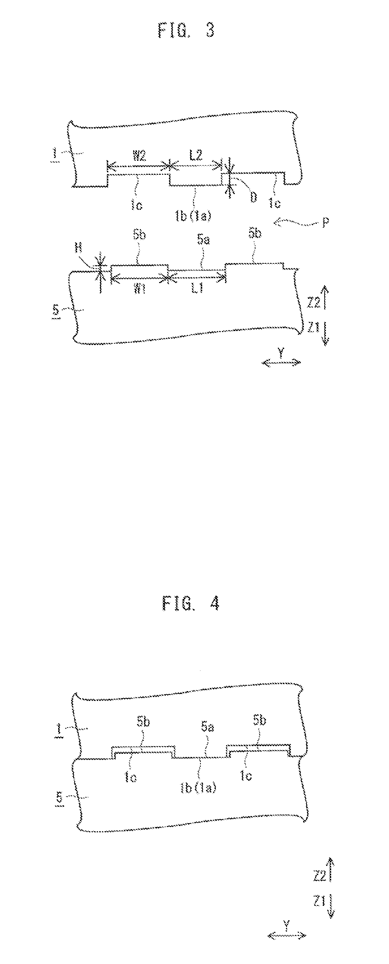

The shutter member 5 is movable in an opening direction (direction of arrow Z1) and a closing direction (direction of arrow Z2) for opening or closing the slot 1a. At an upper end 5a of the shutter member 5, as shown in Fig. 3, a plurality of projecting parts 5b are formed at a predetermined interval L1 in a width direction (direction of Y) of the shutter member 5. Hence, the upper end 5a of the shutter member 5 is formed into comb-like shape in front view. The projecting parts 5b have width W1 and height H.

On an upper (direction of arrow Z2) inner surface of the slot 1a, a contact part 1b is formed in an area corresponding to the shutter member 5. On the contact part 1b, in the width direction (direction of Y), a plurality of concave parts 1c are formed at interval of L2 which are a little smaller than the interval L1. The concave parts 1c are an example of "receiving parts" in the present invention. Each of concave parts 1c has width W2 which is a little larger than the width W1 and has depth D which is larger than the height H. In addition, each of the concave parts 1c is formed into rectangular shape in plan view and arranged at an upper position of an area corresponding to the projecting parts 5b.

Accordingly, as shown in Fig. 4, the upper end 5a of the shutter member 5 contacts with the contact part 1b when the shutter member 5 is in the closing state and the projecting parts 5b are received by the concave parts 1c. Thus, the concave parts 1c serve as receiving parts of the projecting parts 5b.

The shutter position detecting sensor 6 is, for example, a microswitch and detects that the shutter member 5 is moved to the position of the closing state. The card insertion detecting sensor 7 is, for example, a microswitch and detects that the card 200 is inserted into the slot 1a. In addition, the card insertion detecting sensor 7 is arranged so that the distance from the sensor 7 to the card position detecting sensor 3a becomes shorter than the length of the card 200 in the direction of arrow X1.

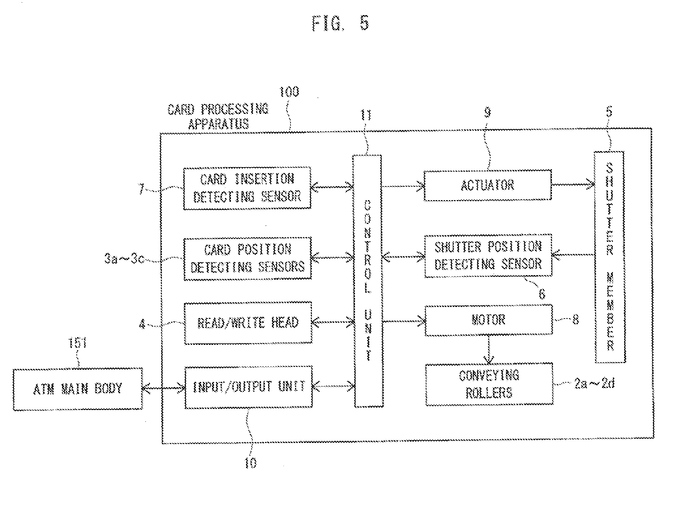

Further, as shown in Fig. 5, the card processing apparatus 100 includes a motor 8 for driving the conveying rollers 2a to 2d, an actuator 9 such as solenoid for moving the shutter member 5, an input/output unit 10 for exchanging data with the ATM main body 151 and a control unit 11 for controlling operation of the card processing apparatus 100. The actuator 9 is an example of the "drive unit" in the present invention.

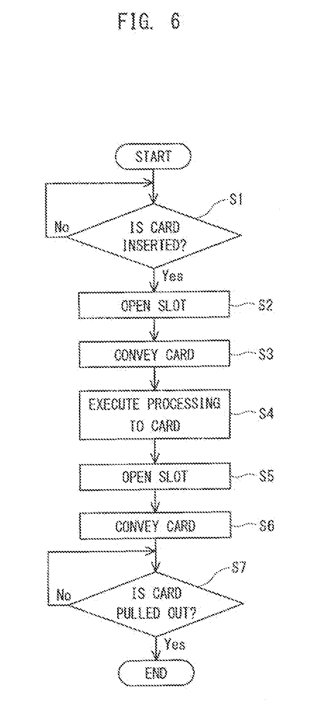

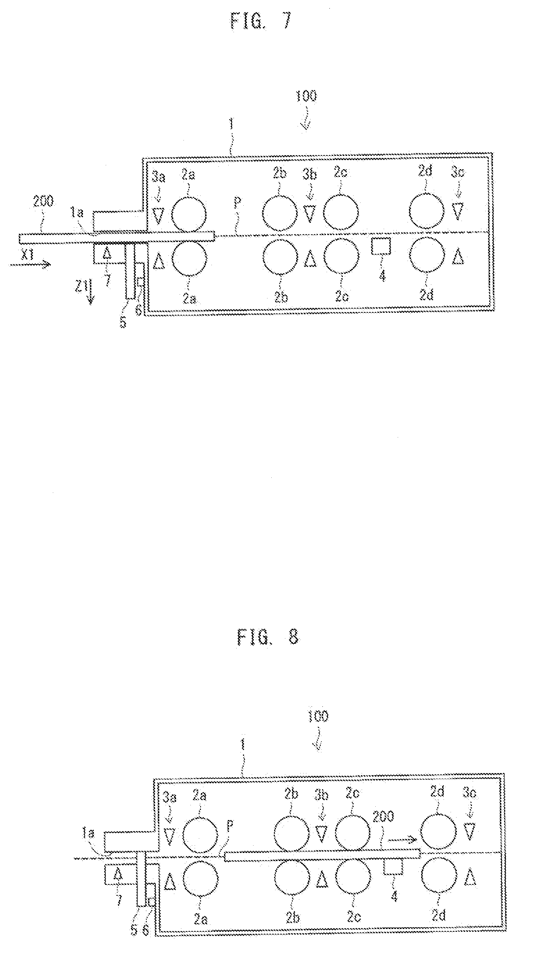

Fig. 6 is a flow chart for illustrating operation of the card processing apparatus according to an embodiment of the present invention. Figs. 7 to 9 are side views for illustrating operation of the card processing apparatus according to an embodiment of the present invention. With reference to Fig. 2 and Figs. 5 to 9, operation of the card processing apparatus 100 according to the present embodiment will be described. Every step of the flow chart is executed by the control unit 11 (see Fig. 5).

First, in the card processing apparatus 100, in step S1 of Fig. 6, whether the card 200 (see Fig. 2) is inserted into the slot 1a (see Fig. 2) of the housing 1 or not is determined based on the detection result of the card insertion detecting sensor 7 (see Fig. 2). If it is determined that the card 200 is not inserted into the slot 1a, step S1 is repeated, i.e., the card processing apparatus 100 stands by until the card 200 is inserted. And when it is determined that the card 200 is inserted into the slot 1a, the flow advances to step S2.

In step S2, the actuator 9 (see Fig. 5) moves the shutter member 5 (see Fig. 2) in an opening direction (direction of arrow Z1). Consequently, as shown in Fig. 7, the shutter member 5 retreats from the conveying path P and thus the slot 1a is opened. Then, in step S3, the conveying rollers 2a to 2d (see Fig. 7) are rotated in a normal direction by driving the motor 8 (see Fig. 5). Therefore, since the card 200 is conveyed along the direction of arrow X1, the card 200 is fetched into the housing 1, as shown in Fig. 8. After the slot 1a is opened, it is closed with the shutter member 5 as the predetermined time has elapsed. Details of this operation of closing the slot 1a will be described later.

In step S4, the read/write head 4 reads and writes data from/to the card 200 fetched into the housing 1. At this time, the card processing apparatus 100 communicates with the ATM main body 151 (see Fig. 5) through the input/output unit 10 (see Fig. 5).

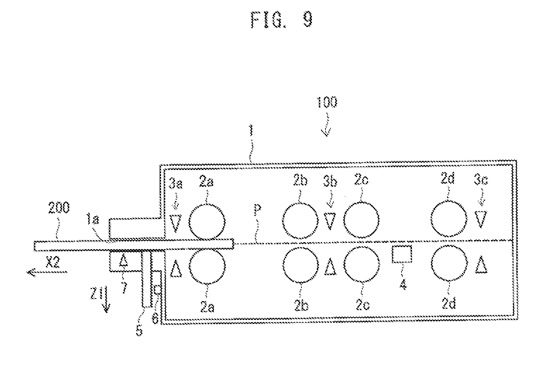

After that, when a command for ejecting the card 200 is inputted from the ATM main body 151, the shutter member 5 is moved in the direction of arrow Z1 by the actuator 9 in step S5. Consequently, as shown in Fig. 9, the shutter member 5 retreats from the conveying path P and thus the slot 1a is opened. In step S6, the conveying rollers 2a to 2d are rotated in a reverse direction by driving the motor 8. Therefore, the card 200 is conveyed along the direction of arrow X2.

In step S7, it is determined whether the card 200 is pulled out from the slot 1a or not based on the detection result of the card insertion detecting sensor 7. If it is determined that the card 200 is not pulled out, step S7 is repeated, i.e., the card processing apparatus 100 stands by until the card 200 is pulled out. When it is determined that the card 200 is pulled out, the slot 1a is closed by the shutter member 5 and a series of operations is completed.

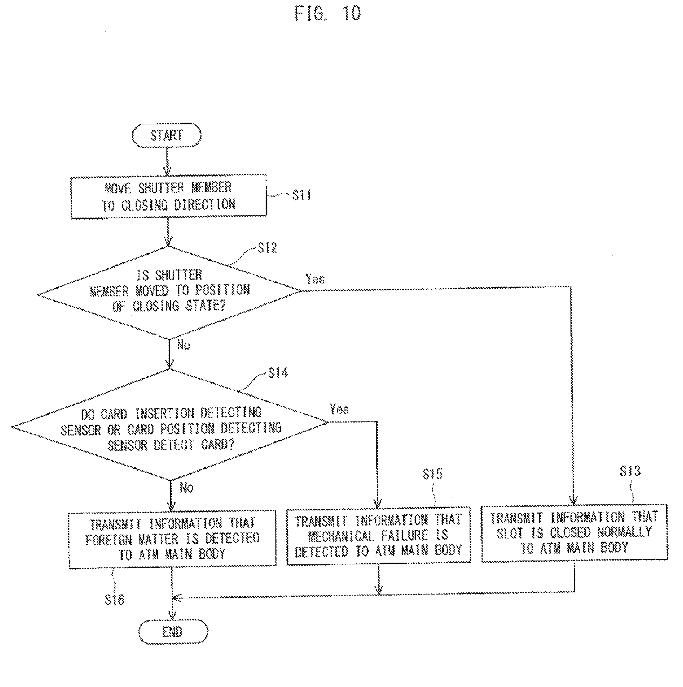

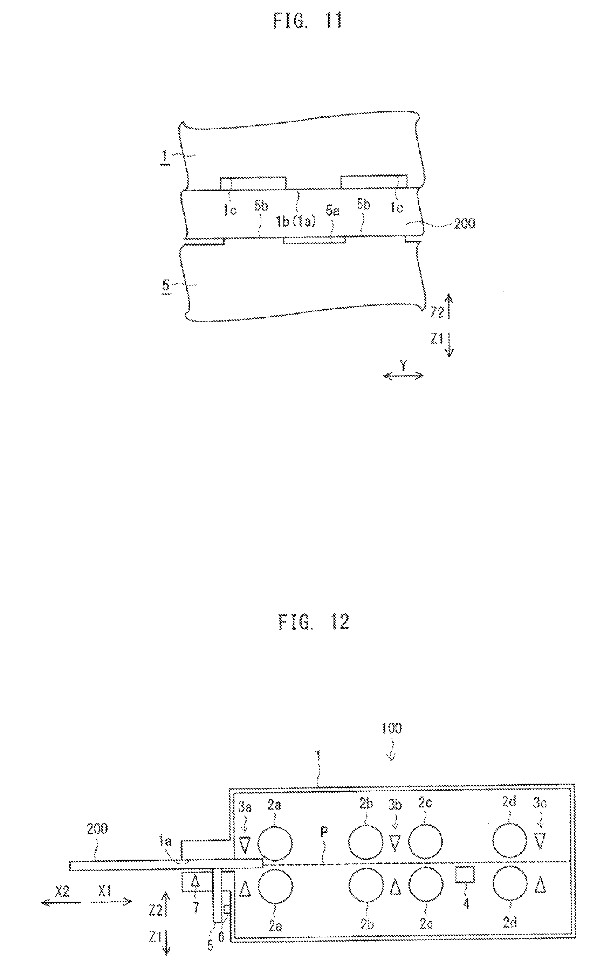

Fig. 10 is a flow chart for illustrating operation of closing the slot of the card processing apparatus according to an embodiment of the present invention. Figs. 11 to 14 are views for illustrating the operation of closing the slot of the card processing apparatus according to an embodiment of the present invention. With reference to Figs. 3 to 5 and Figs. 10 to 14, the operation of closing the slot 1a of the card processing apparatus 100 according to the present embodiment will be described. Every step of the flow chart is executed by the control unit 11 (see Fig. 5).

First, in the card processing apparatus 100, the shutter member 5 (see Fig. 3) is moved in a closing direction (direction of arrow Z2) by the actuator 9 (see Fig. 5) in step S11 of Fig. 10.

Then, in step S12, it is determined whether the shutter member 5 is moved to the position of the closing state based on the detection result of the shutter position detecting sensor 6 (see Fig. 5). If, as shown in Fig. 4, the upper end 5a of the shutter member 5 contacts with the contact part 1b whereby it is determined that the shutter member 5 is moved to the position of the closing state, notice of normal closing of the slot 1a is transmitted to the ATM main body 151 (see Fig. 5) in step S13, and operation of closing the slot 1a is completed. On the other hand, if the upper end 5a of the shutter member 5 does not contact with the contact part 1b whereby it is determined that the shutter member 5 is not moved to the position of the closing state, i.e., the slot 1a is not closed normally, the flow advances to step S14.

In step S14, it is determined whether at least one of the card insertion detecting sensor 7 (see Fig. 5) and the card position detecting sensor 3a (see Fig. 5) detects the card 200 or not. If in step S12 it is determined that the shutter member 5 does not move to the position of the closing state due to the presence of the card 200 between the shutter member 5 and the contact part 1b as shown in Fig. 11, and also if at least one of the card insertion detecting sensor 7 and the card position detecting sensor 3a detects the card 200 as shown in Fig. 12, it is determined that the card 200 is pinched due to a mechanical failure. In this case, in step S15, such information is transmitted to the ATM main body 151 and the operation of closing the slot 1a is completed. Then occurrence of mechanical failure is notified from the ATM main body 151 to the staff room and the ATM 150 turns into a state of handling interruption. Further, restoration work is performed by the staff. Mechanical failure is, for example, a failure in the motor 8 or the conveying rollers 2a to 2d.

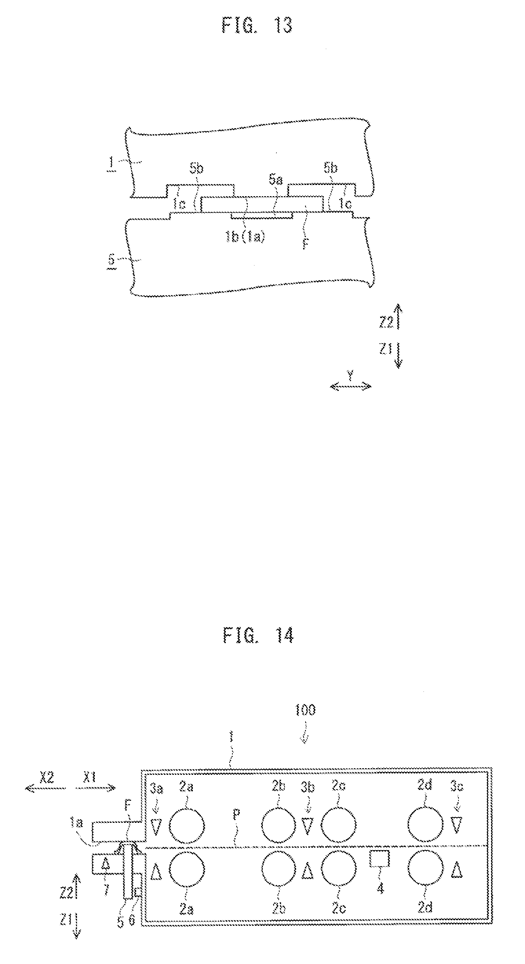

On the other hand, if it is determined that the shutter member 5 is not moved to the position of the closing state in step S12 due to the presence of a foreign matter F between the shutter member 5 and the contact part 1b as shown in Fig. 13, and also if both the card insertion detecting sensor 7 and the card position detecting sensor 3a do not detect the card 200 as shown in Fig. 14, it is determined that the foreign matter F is pinched. In this case, in step S16, such information is transmitted to the ATM main body 151 and the operation of closing the slot 1a is completed. Then detection of foreign matter is notified from the ATM main body 151 to the staff room and the ATM 150 turns into a state of handling interruption. Further, work for removing the foreign matter is performed by the staff.

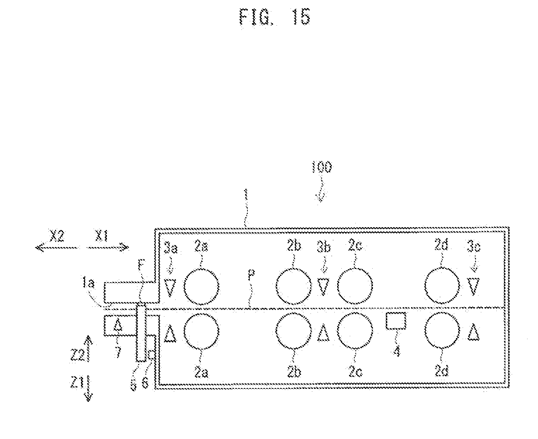

In the present embodiment, as described above, it is possible to prevent a placement of foreign matter inside the slot 1a, by providing the shutter member 5 on which the plurality of projecting parts 5b are formed at the predetermined interval L1 in a width direction of the shutter member 5 and the contact part 1b on which the plurality of concave parts 1c are formed at the predetermined interval L2. In the card processing apparatus according to the aforementioned Patent Literature 2, since the groove of the engaging member extends continuously in a direction orthogonal to the insertion direction of the card, it is easily allowed to place a ribbon-like foreign matter in the groove along this direction to close the slot. On the other hand, in the present embodiment, since the plurality of concave parts 1c are provided at intervals, it becomes difficult to place the foreign matter F in the concave parts 1c to close the slot 1a. If the ribbon-like foreign matter F is placed as shown in Fig. 14, it is possible to detect the placement of foreign matter F in the slot 1a. As a result, an illegal act to the card processing apparatus 100, in which an actor intentionally causes a card jam due to the foreign matter F and takes another person's card away, can be effectively prevented. Also, as shown in Fig. 15, even if the foreign matter F whose length in the direction of arrow X1 is shorter than thickness of the shutter member 5 is placed, it is possible to detect the foreign matter.

Moreover, in the present embodiment, when it is determined that the slot 1a is not closed normally (NO at step S12), it is further determined whether a foreign matter is detected or a mechanical failure is detected (step S14). Therefore, the detection accuracy of the foreign matter F placed in the slot 1a can be enhanced. When the slot 1a is not closed normally, work by the staff is required. However, the staff can take suitable measures corresponding to each situation since the placement of foreign matter and the mechanical failure are detected distinctively.

The present invention can employ various other embodiments in addition to the above-described embodiment. For example, in the above embodiment, the present invention is applied to the card processing apparatus 100 mounted in the ATM 150 illustratively. In addition thereto, the present invention can be applied to a card processing apparatus mounted in other host devices such as entry/exit management device.

In the above embodiment, as an example, it is judged in step S14 whether a foreign matter is detected or a mechanical failure is detected. Alternatively, when it is determined that the shutter member 5 does not move to the position of the closing state in step S12, it may be judged that a foreign matter is detected.

In the above embodiment, the concave parts 1c having the bottom are formed on the contact part 1b illustratively as the receiving parts for receiving the projecting parts 5b of the shutter member 5. Alternatively, openings of through-holes may be formed as the receiving parts instead of the concave parts 1c.

In the above embodiment, as an example, the shutter member 5 is provided at lower side of the slot 1a, the projecting parts 5b are formed at the upper end 5a of the shutter member 5 and the contact part 1b is formed on the upper inner surface of the slot 1a. Alternatively, it is adoptable that the shutter member 5 is provided at upper side of the slot 1a, on a lower inner surface of the slot 1a.

In the above embodiment, as an example, depth D of the concave parts 1c is larger than height H of the projecting parts 5b. Alternatively, depth D of the concave parts 1c may be equal to height H of the projecting parts 5b, or height H of the projecting parts 5b may be larger than depth D of the concave parts 1c. In other words, the projecting parts 5b may contact with the concave parts 1c when the shutter member 5 is in the closing state.

In the above embodiment, a microswitch is used as an example of the shutter position detecting sensor 6. Alternatively, a Hall element may be employed as the shutter position detecting sensor 6.

Further, in the above embodiment, height H of the projecting parts 5b can be set based on detection accuracy of the shutter position detecting sensor 6. Specifically, if height H of the projecting parts 5b is made larger, a distance between the position of the shutter member 5 being in the closing state and the position of the shutter member 5 pinching the foreign matter F or the card 200 can be larger. Therefore, even if the shutter position detecting sensor 6 with low detection accuracy is employed, it is possible to detect a foreign matter and the like reliably.

It should also be understood that although the foregoing description has been made on preferred embodiments, the invention is not limited thereto and various changes and modifications, for example, by combining features of the above-described embodiments, may be made without departing from the scope of the appended claims.

### Reference Signs List

- 1a: slot
- 1b: contact part
- 1c: concave part (receiving part)
- 3a: card position detecting sensor (card position detector)
- 5: shutter member
- 5a: upper end (end part)
- 5b: projecting part
- 6: shutter position detecting sensor (shutter position detector)
- 7: card insertion detecting sensor (card insertion detector)
- 9: actuator (drive unit)
- 11: control unit
- 100: card processing apparatus
- 200: card

## Claims

1. A card processing apparatus (100) comprising: a slot (1a) into which a card (200) can be inserted; and a movable shutter member (5) for opening or closing the slot (1a);
**characterized in that** the card processing apparatus (100) further comprises: a shutter position detector (6) adapted for detecting the position of the shutter member (5); and a contact part (1b) which contacts with an end part (5a) of the shutter member (5) when the shutter member (5) is in a closing state,
at the end part (5a) of the shutter member (5), a plurality of projecting parts (5b) are formed at a predetermined interval in a width direction of the shutter member (5), and
at the contact part (1b), receiving parts (1c) are formed to receive the projecting parts (5b) of the shutter member (5) when the shutter member (5) is in the closing state.

2. The card processing apparatus (100) according to claim 1,
further comprising: a drive unit (9) for moving the shutter member (5); and a control unit (11) for controlling the drive unit (9),
wherein when the shutter member (5) is moved by the drive unit (9) to close the slot (1a), the control unit (11) determines whether a foreign matter is placed in the slot (1a) by determining whether the shutter member (5) is moved to the position of the closing state based on the detection result of the shutter position detector (6).

3. The card processing apparatus (100) according to claim 1,
further comprising: a drive unit (9) for moving the shutter member (5); a control unit (11) for controlling the drive unit (9); a card insertion detector (7) for detecting insertion of the card (200) into the slot (1a); and a card position detector (3a) for detecting the position of the card (200) inserted through the slot (1a),
wherein when the shutter member (5) is moved by the drive unit (9) to close the slot (1a), if it is determined that the shutter member (5) does not move to the position of the closing state based on a detection result of the shutter position detector (6), the control unit (11) determines whether a foreign matter is placed in the slot (1a) based on the detection result of the card insertion detector (7) and the card position detector (3a).

4. The card processing apparatus (100) according to claim 3,
wherein the control unit (11) determines that the foreign matter is placed in the slot (1a) if both the card insertion detector (7) and the card position detector (3a) do not detect the card (200).

5. The card processing apparatus (100) according to claim 3 or 4,
wherein the control unit (11) determines that the card (200) is pinched if at least one of the card insertion detector (7) and the card position detector (3a) detects the card (200).

## Patentansprüche

1. Kartenverarbeitungsvorrichtung (100), die umfasst: einen Schlitz (1a), in den eine Karte (200) eingesteckt werden kann; und ein bewegliches Verschlusselement (5) zum Öffnen oder Schließen des Schlitzes (1a);
**dadurch gekennzeichnet, dass** die Kartenverarbeitungsvorrichtung (100) ferner Folgendes umfasst: einen Verschlusspositionsdetektor (6), der ausgelegt ist, die Position des Verschlusselements (5) zu detektieren; und ein Kontaktbauteil (1b), das ein Endbauteil (5a) des Verschlusselements (5) kontaktiert, wenn das Verschlusselement (5) in einem Schließzustand ist,
an dem Endbauteil (5a) des Verschlusselements (5) mehrere vorstehende Bauteile (5b) in einem vorgegebenen Abstand in einer Breitenrichtung des Verschlusselements (5) gebildet sind und
an dem Kontaktbauteil (1b) Bauteile (1c) zum Aufnehmen gebildet sind, um die vorstehenden Bauteile (5b) des Verschlusselements (5) aufzunehmen, wenn das Verschlusselement (5) in dem Schließzustand ist.

2. Kartenverarbeitungsvorrichtung (100) nach Anspruch 1,
die ferner umfasst: eine Antriebseinheit (9) zum Bewegen des Verschlusselements (5); und eine Steuereinheit (11) zum Steuern der Antriebseinheit (9),
wobei das Verschlusselement (5) durch die Antriebseinheit (9) bewegt wird, um den Schlitz (1a) zu schließen, wobei die Steuereinheilt (11) feststellt, ob ein Fremdkörper in dem Schlitz (1a) vorhanden ist, indem anhand des Detektionsergebnisses des Verschlusspositionsdetektors (6) festgestellt wird, ob das Verschlusselement (5) zu der Position des Schließzustands bewegt wurde.

3. Kartenverarbeitungsvorrichtung (100) nach Anspruch 1,
die ferner umfasst: eine Antriebseinheit (9) zum Bewegen des Verschlusselements (5); eine Steuereinheit (11) zum Steuern der Antriebseinheit (9); einen Karteneinsteckdetektor (7) zum Detektieren eines Einsteckens der Karte (200) in den Schlitz (1a); und einen Kartenpositionsdetektor (3a) zum Detektieren der Position der durch den Schlitz (1a) eingesteckten Karte (200),
wobei das Verschlusselement (5) durch die Antriebseinheit (9) bewegt wird, um den Schlitz (1a) zu schließen, falls anhand eines Detektionsergebnisses des Verschlusspositionsdetektors (6) festgestellt wird, dass sich das Verschlusselement (5) nicht zu der Position des Schließzustands bewegt, wobei die Steuereinheit (11) anhand des Detektionsergebnisses des Karteneinsteckdetektors (7) und des Kartenpositionsdetektors (3a) feststellt, ob ein Fremdkörper in dem Schlitz (1a) vorhanden ist.

4. Kartenverarbeitungsvorrichtung (100) nach Anspruch 3,
wobei die Steuereinheit (11) feststellt, dass der Fremdkörper in dem Schlitz (1a) vorhanden ist, falls sowohl der Karteneinsteckdetektor (7) als auch der Kartenpositionsdetektor (3a) die Karte (200) nicht detektieren.

5. Kartenverarbeitungsvorrichtung (100) nach Anspruch 3 oder 4,
wobei die Steuereinheit (11) feststellt, dass die Karte (200) eingeklemmt ist, falls der Karteneinsteckdetektor (7) und/oder der Kartenpositionsdetektor (3a) die Karte (200) detektieren.

## Revendications

1. Appareil de traitement de cartes (100) comprenant : une fente (1a) dans laquelle une carte (200) peut être insérée, et un élément obturateur mobile (5) pour ouvrir ou fermer la fente (1a) ;
**caractérisé en ce que** l'appareil de traitement de cartes (100) comprend en outre : un détecteur de position d'obturateur (6) adapté à détecter la position de l'élément obturateur (5) ; et une partie de contact (1b) qui vient en contact avec une partie terminale (5a) de l'élément obturateur (5) quand l'élément obturateur (5) est dans un état fermé,
au niveau de la partie terminale (5a) de l'élément obturateur (5), une pluralité de parties en projection (5b) sont formées à intervalles prédéterminés dans une direction en largeur de l'élément obturateur (5), et
au niveau de la partie de contact (1b), des parties de réception (1c) sont formées pour recevoir les parties en projection (5b) de l'élément obturateur (5) quand l'élément obturateur (5) est dans l'état fermé.

2. Appareil de traitement de cartes (100) selon la revendication 1, comprenant en outre une unité d'entraînement (9) pour déplacer l'élément obturateur (5) ; et une unité de commande (11) pour commander l'unité d'entraînement (9),
dans lequel, quand l'élément obturateur (5) est déplacé par l'unité d'entraînement (9) pour fermer la fente (1a), l'unité de commande (11) détermine si des matières étrangères sont placées dans la fente (1a) en déterminant si l'élément obturateur (5) est déplacé à la position de l'état fermé sur la base du résultat de détection du détecteur de position d'obturateur (6).

3. Appareil de traitement de cartes (100) selon la revendication 1, comprenant en outre : une unité d'entraînement (9) pour déplacer l'élément obturateur (5) ; une unité de commande (11) pour commander l'unité d'entraînement (9) ; un détecteur d'insertion de carte (7) pour détecter l'insertion de la carte (200) dans la fente (1a) ; et un détecteur de position de carte (3a) pour détecter la position de la carte (200) insérée à travers la fente (1a),
dans lequel, quand l'élément obturateur (5) est déplacé par l'unité d'entraînement (9) pour fermer la fente (1a), s'il est déterminé que l'élément obturateur (5) ne se déplace pas à la position de l'état fermé sur la base d'un résultat de détection du détecteur de position d'obturateur (6), l'unité de commande (11) détermine si des matières étrangères sont placées dans la fente (1a) sur la base du résultat de détection du détecteur d'insertion de carte (7) et du détecteur de position de carte (3a).

4. Appareil de traitement de cartes (100) selon la revendication 3,
dans lequel l'unité de commande (11) détermine que des matières étrangères sont placées dans la fente (1a) si le détecteur d'insertion de carte (7) et le détecteur de position de carte (3a) ne détectent tous les deux pas de carte (200).

5. Appareil de traitement de cartes (100) selon la revendication 3 ou 4,
dans lequel l'unité de commande (11) détermine que la carte (200) est pincée si l'un au moins du détecteur d'insertion de carte (7) et du détecteur de position de carte (3a) détecte la carte (200).
